# EUROPEAN PATENT APPLICATION

(11) **EP 3 401 893 A1**
(43) Date of publication of application: **14.11.2018**
(21) Application number: 18171121.9
(22) Date of filing: 07.05.2018
(51) Int. Cl.: G08G 5/00

(54) **SYSTEMS AND METHODS FOR PROVIDING ALERTS BASED ON POTENTIAL NON-COMPLIANCE WITH FLIGHT CONSTRAINTS ONBOARD AN AIRCRAFT**

(30) Priority: 11.05.2017 US 201715592318
(71) Applicant: Honeywell International Inc., Morris Plains, NJ New Jersey 07950 (US)
(72) Inventor: SHANBHAG, Vasudev Prakash, Morris Plains, NJ New Jersey 07950 (US); N, Mahesh Babu, Morris Plains, NJ New Jersey 07950 (US); SONGA, Anil Kumar, Morris Plains, NJ New Jersey 07950 (US); BAZAWADA, Suresh, Morris Plains, NJ New Jersey 07950 (US); REDDY, Darapu Mahipal, Morris Plains, NJ New Jersey 07950 (US)
(74) Representative: Houghton, Mark Phillip

(57) **Abstract**

A method for providing emergency alerts onboard an aircraft is provided. The method obtains chart data associated with a current flight of the aircraft; extracts flight constraints from the chart data, wherein the flight constraints comprise restrictions for performing action items applicable to the current flight; compares the flight constraints to flight data associated with the current flight, the flight data comprising an approved flight plan, an estimated time of arrival, Automatic Terminal Information Service (ATIS) data, flight plan restriction data, and onboard equipment failure; identifies at least one of the flight constraints that applies to the current flight, by the at least one processor, based on the comparing; and presents an alert associated with the at least one of the flight constraints.

## Description

### TECHNICAL FIELD

Embodiments of the subject matter described herein relate generally to presenting alerts onboard an aircraft, and more particularly, embodiments of the subject matter relate to identifying potential non-compliance with flight constraints and presenting alerts in response.

### BACKGROUND

Aviation and aeronautical charts provide flight planning data, including navigation data, which may be obtained and used prior to and during a flight. The use of charts onboard an aircraft is essential to ensure that the aircraft lands safely in adverse conditions, such as a low ceiling, reduced visibility due to fog or snow, or the like. In addition to providing navigation information, altitudes, and runway information, charts may also provide alternate minimums, conditional notes, or constraints applicable for approach flight plans, an airport, or a particular runway. Such constraints are provided for situational awareness of the flight crew.

Accordingly, it is desirable to enhance situational awareness of a flight crew onboard an aircraft during flight. Furthermore, other desirable features and characteristics will become apparent from the subsequent detailed description and the appended claims, taken in conjunction with the accompanying drawings and the foregoing technical field and background.

### BRIEF SUMMARY

Some embodiments of the present disclosure provide a method for providing emergency alerts onboard an aircraft. The method obtains chart data associated with a current flight of the aircraft, by at least one processor onboard the aircraft; extracts flight constraints from the chart data, by the at least one processor, wherein the flight constraints comprise restrictions for performing action items applicable to the current flight; compares the flight constraints to flight data associated with the current flight, the flight data comprising an approved flight plan, an estimated time of arrival, Automatic Terminal Information Service (ATIS) data, flight plan restriction data, and on board equipment failure, by the at least one processor; identifies at least one of the flight constraints that applies to the current flight, by the at least one processor, based on the comparing; and presents an alert associated with the at least one of the flight constraints, by a display device communicatively coupled to the at least one processor.

Some embodiments of the present disclosure provide a system for providing emergency alerts onboard an aircraft. The system includes a system memory element; a display device, configured to present the emergency alerts onboard the aircraft; a communication device, configured to establish communication connections with air traffic control (ATC) and at least one remote server, and to obtain flight data via the communication connections; and at least one processor, communicatively coupled to the system memory element, the display device, and the communication device, the at least one processor configured to: obtain chart data associated with a current flight of the aircraft; extract flight constraints from the chart data, wherein the flight constraints comprise restrictions for performing action items applicable to the current flight; compare the flight constraints to the flight data associated with the current flight, the flight data comprising an approved flight plan, an estimated time of arrival, Automatic Terminal Information Service (ATIS) data, flight plan restriction data, and on board equipment failure; identify at least one of the flight constraints that applies to the current flight, based on the comparing; and present an alert associated with the at least one of the flight constraints, via the display device.

Some embodiments of the present disclosure provide a non-transitory, computer-readable medium containing instructions thereon, which, when executed by a processor, perform a method. The method identifies at least one constraint that applies to a current flight plan of an aircraft, by the processor onboard the aircraft; and presents an alert associated with the at least one constraint, by a display device communicatively coupled to the processor.

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

### BRIEF DESCRIPTION OF THE DRAWINGS

A more complete understanding of the subject matter may be derived by referring to the detailed description and claims when considered in conjunction with the following figures, wherein like reference numbers refer to similar elements throughout the figures.
FIG. 1 is a diagram of a system for providing emergency alerts onboard an aircraft, in accordance with the disclosed embodiments;
FIG. 2 is a functional block diagram of a computing device, in accordance with the disclosed embodiments;
FIG. 3 is a diagram of an embodiment of an alert presented via a display device, in accordance with the disclosed embodiments;
FIG. 4 is a diagram of a second embodiment of an alert presented via a display device, in accordance with the disclosed embodiments;
FIG. 5 is a diagram of a third embodiment of an alert presented via a display device, in accordance with the disclosed embodiments;
FIG. 6 is a flow chart that illustrates an embodiment of a process for providing emergency alerts onboard an aircraft, in accordance with the disclosed embodiments;
FIG. 7 is a flow chart that illustrates an embodiment of a process for providing emergency alerts based on pilot status, in accordance with the disclosed embodiments; and
FIG. 8 is a flow chart that illustrates an embodiment of a process for providing emergency alerts based on aircraft type, in accordance with the disclosed embodiments.

### DETAILED DESCRIPTION

The following detailed description is merely illustrative in nature and is not intended to limit the embodiments of the subject matter or the application and uses of such embodiments. As used herein, the word "exemplary" means "serving as an example, instance, or illustration." Any implementation described herein as exemplary is not necessarily to be construed as preferred or advantageous over other implementations. Furthermore, there is no intention to be bound by any expressed or implied theory presented in the preceding technical field, background, brief summary or the following detailed description.

The subject matter presented herein relates to systems and methods for identifying potential non-compliance with flight plan constraints onboard an aircraft, and subsequently alerting the flight crew. More specifically, the subject matter relates to identifying applicable constraints from electronic chart data for a current flight plan, comparing the identified constraints to flight data parameters associated with operation of the aircraft during the current flight, and identifying instances of potential non-compliance based on the comparison.

Certain terminologies are used with regard to the various embodiments of the present disclosure. Flight constraints are restrictions for performing action items applicable to the current flight, which limit the performance of one or more action items to circumstances in which a particular condition exists. Examples of constraints may include, but are not limited to, restricting the performance of landing procedures (i.e., action items) to daytime hours (i.e., a condition) and/or to circumstances during which local weather data is available (i.e., a condition) or a destination airport tower is operational (i.e., a condition).

As used herein, charts may be any aviation chart or aeronautical chart provided as an informational aid to a flight crew for flight planning purposes. Chart data is any data provided by an electronic chart or a data driven chart (DDC). Aircraft generally use electronic charts for providing a flight crew member with information specific to a particular route and/or airport. Electronic charts may include airport maps; intersections and taxiways data; procedures and data associated with approach, arrival, and departure; and any flight constraints associated with a current flight plan. A flight plan is a proposed strategy for an intended flight, includes details associated with the intended flight, and is usually filed with an aviation authority (e.g., Federal Aviation Administration). An intended flight may also be referred to as a "trip", and extends from a departure airport at the beginning point of the trip to a destination airport at the endpoint of the trip. An alert may be any signal or warning indicating potential non-compliance with constraints associated with the current flight plan. The alert may be implemented as a display of text and/or graphical elements, a sound, a light, or other visual or auditory warning signal onboard the aircraft.

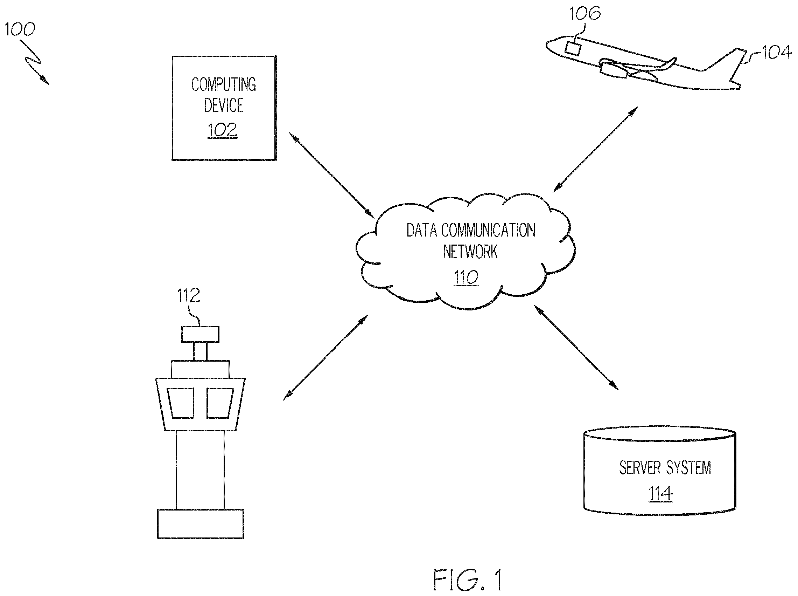

Turning now to the figures, FIG. 1 is a diagram of a system 100 for providing emergency alerts onboard an aircraft, in accordance with the disclosed embodiments. The system 100 operates to identify constraints associated with a current flight of the aircraft 104, to continuously monitor flight data and parameters during flight, and to alert a flight crew onboard the aircraft 104 when the current flight is not complying with the identified constraints. The system 100 may include, without limitation, a computing device 102 that communicates with one or more avionics systems 106 onboard the aircraft 104, at least one server system 114, and air traffic control (ATC) 112, via a data communication network 110. In practice, certain embodiments of the system 100 may include additional or alternative elements and components, as desired for the particular application.

The computing device 102 may be implemented by any computing device that includes at least one processor, some form of memory hardware, a user interface, and communication hardware. For example, the computing device 102 may be implemented using a personal computing device, such as a tablet computer, a laptop computer, a personal digital assistant (PDA), a smartphone, or the like. In this scenario, the computing device 102 is capable of storing, maintaining, and executing an Electronic Flight Bag (EFB) application configured to determine and present emergency alerts when flight constraints may not be satisfied by the current flight of the aircraft 104. In other embodiments, the computing device 102 may be implemented using a computer system onboard the aircraft 104, which is configured to determine and present such emergency alerts.

The aircraft 104 may be any aviation vehicle for which flight constraints and alerts associated with non-compliance with flight constraints are relevant and applicable during completion of a flight route. The aircraft 104 may be implemented as an airplane, helicopter, spacecraft, hovercraft, or the like. The one or more avionics systems 106 may include a Flight Management System (FMS), crew alerting system (CAS) devices, automatic terminal information system (ATIS) devices, Automatic Dependent Surveillance - Broadcast (ADS-B), Controller Pilot Data Link Communication (CPDLC), navigation devices, weather radar, aircraft traffic data, and the like. Data obtained from the one or more avionics systems 106 may include, without limitation: an approved flight plan, an estimated time of arrival, instructions from air traffic control (ATC), Automatic Terminal Information Service (ATIS) data, flight plan restriction data, onboard equipment failure data, aircraft traffic data, weather data, or the like.

The server system 114 may include any number of application servers, and each server may be implemented using any suitable computer. In some embodiments, the server system 114 includes one or more dedicated computers. In some embodiments, the server system 114 includes one or more computers carrying out other functionality in addition to server operations. The server system 114 may store and provide any type of data used to determine compliance and/or non-compliance with constraints associated with the current flight. Such data may include, without limitation: flight plan data, flight plan constraint data, and other data compatible with the computing device 102.

The computing device 102 is usually located onboard the aircraft 104, and the computing device 102 communicates with the server system 114 and air traffic control 112 via a wireless communication connection. The computing device 102 and the server system 114 are generally disparately located, and the computing device 102 and air traffic control 112 are generally disparately located. The computing device 102 communicates with the server system 114 and air traffic control 112 via the data communication network 110 and/or via communication mechanisms onboard the aircraft 104.

The data communication network 110 may be any digital or other communications network capable of transmitting messages or data between devices, systems, or components. In certain embodiments, the data communication network 110 includes a packet switched network that facilitates packet-based data communication, addressing, and data routing. The packet switched network could be, for example, a wide area network, the Internet, or the like. In various embodiments, the data communication network 110 includes any number of public or private data connections, links or network connections supporting any number of communications protocols. The data communication network 110 may include the Internet, for example, or any other network based upon TCP/IP or other conventional protocols. In various embodiments, the data communication network 110 could also incorporate a wireless and/or wired telephone network, such as a cellular communications network for communicating with mobile phones, personal digital assistants, and/or the like. The data communication network 110 may also incorporate any sort of wireless or wired local and/or personal area networks, such as one or more IEEE 802.3, IEEE 802.16, and/or IEEE 802.11 networks, and/or networks that implement a short range (e.g., Bluetooth) protocol. For the sake of brevity, conventional techniques related to data transmission, signaling, network control, and other functional aspects of the systems (and the individual operating components of the systems) may not be described in detail herein.

During typical operation, the computing device 102 obtains aviation and/or aeronautical chart data that includes flight constraints for a current flight plan of the aircraft 104, from the one or more avionics systems 106 and the remote server system 114. Charts are available in the form of a chart database, stored locally onboard the aircraft. Charts can also be made available from external device such as a computing device 102 that stores, maintains, and executes an Electronic Flight Bag application (EFB). The computing device 102 also obtains flight parameter data associated with the current flight plan of the aircraft 104, and determines whether the current flight plan may cause non-compliance with any of the identified flight constraints. Flight constraints may include any restriction on action items for the aircraft 104. For example, an action item for the aircraft 104 may be performing landing procedures onboard the aircraft 104. Constraints associated with the landing procedures may be restricted to certain hours of the day, or when certain conditions are met (e.g., when weather data is available for the landing location, when ATC 112 tower is operational). When non-compliance with flight constraints may potentially occur, the computing device 102 presents an alert to the flight crew and, in some embodiments, transmits the alert to ATC 112 and/or a ground dispatcher or other ground control personnel.

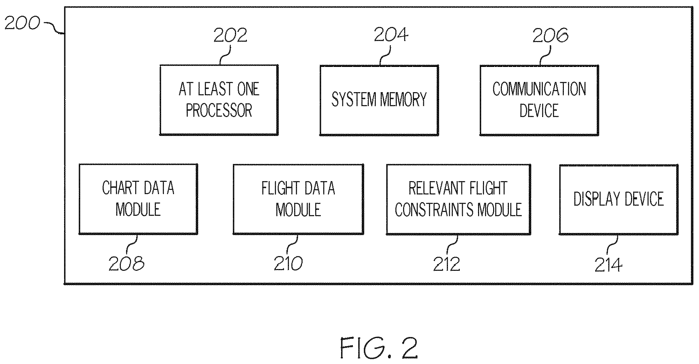

FIG. 2 is a functional block diagram of a computing device 200, in accordance with the disclosed embodiments. It should be noted that the computing device 200 can be implemented with the computing device 102 depicted in FIG. 1. In this regard, the computing device 200 shows certain elements and components of the computing device 102 in more detail.

The computing device 200 generally includes, without limitation: at least one processor 202; system memory 204; a communication device 206; a chart data module 208; a flight data module 210; a relevant flight constraints module 212; and a display device 214. These elements and features of the computing device 200 may be operatively associated with one another, coupled to one another, or otherwise configured to cooperate with one another as needed to support the desired functionality - in particular, providing emergency alerts during periods of potential non-compliance with flight constraints, as described herein. For ease of illustration and clarity, the various physical, electrical, and logical couplings and interconnections for these elements and features are not depicted in FIG. 2. Moreover, it should be appreciated that embodiments of the computing device 200 will include other elements, modules, and features that cooperate to support the desired functionality. For simplicity, FIG. 2 only depicts certain elements that relate to the emergency alert-generating techniques described in more detail below.

The at least one processor 202 may be implemented or performed with one or more general purpose processors, a content addressable memory, a digital signal processor, an application specific integrated circuit, a field programmable gate array, any suitable programmable logic device, discrete gate or transistor logic, discrete hardware components, or any combination designed to perform the functions described here. In particular, the at least one processor 202 may be realized as one or more microprocessors, controllers, microcontrollers, or state machines. Moreover, the at least one processor 202 may be implemented as a combination of computing devices, e.g., a combination of digital signal processors and microprocessors, a plurality of microprocessors, one or more microprocessors in conjunction with a digital signal processor core, or any other such configuration.

The at least one processor 202 is communicatively coupled to the system memory 204. The system memory 204 is configured to store any obtained or generated data associated with emergency alerts related to potential non-compliance with flight constraints, including chart data, flight parameters associated with a current flight plan and operation of the aircraft during flight, and the like. The system memory 204 may be realized using any number of devices, components, or modules, as appropriate to the embodiment. Moreover, the computing device 200 could include system memory 204 integrated therein and/or a system memory 204 operatively coupled thereto, as appropriate to the particular embodiment. In practice, the system memory 204 could be realized as RAM memory, flash memory, EPROM memory, EEPROM memory, registers, a hard disk, a removable disk, or any other form of storage medium known in the art. In certain embodiments, the system memory 204 includes a hard disk, which may also be used to support functions of the computing device 200. The system memory 204 can be coupled to the at least one processor 202 such that the at least one processor 202 can read information from, and write information to, the system memory 204. In the alternative, the system memory 204 may be integral to the at least one processor 202. As an example, the at least one processor 202 and the system memory 204 may reside in a suitably designed application-specific integrated circuit (ASIC).

The communication device 206 is suitably configured to communicate data between the computing device 200 and one or more remote servers, one or more avionics systems onboard an aircraft, and air traffic control and/or ground control. The communication device 206 may transmit and receive communications over a wireless local area network (WLAN), the Internet, a satellite uplink/downlink, a cellular network, a broadband network, a wide area network, a radio communication network, or the like. As described in more detail below, data received by the communication device 206 may include, without limitation: an approved flight plan, an estimated time of arrival, Automatic Terminal Information Service (ATIS) data, flight plan restriction data, onboard equipment failure data, and other data compatible with the computing device 200. Data provided by the communication device 206 may include, without limitation, radio communications and/or downlink communications transmitted to air traffic control (ATC), and the like.

The chart data module 208 is configured to identify and extract constraints noted in the electronic charts for a current flight plan. A flight constraint is a restriction for performing action items applicable to the current flight, effectively limiting the performance of one or more action items to circumstances in which a particular condition exists. Examples of constraints may include, but are not limited to restricting the performance of landing procedures (i.e., action items) to daytime hours (i.e., a condition) and/or to circumstances during which local weather data is available (i.e., a condition) or a destination airport tower is operational (i.e., a condition).

The flight data module 210 is configured to obtain flight data parameters from one or more avionics devices onboard the aircraft and/or from one or more remote servers or other external sources (via the communication device 206). Flight data parameters may include, without limitation: an approved flight plan, an estimated time of arrival, Automatic Terminal Information Service (ATIS) data, flight plan restriction data, onboard equipment failure data, or the like.

The relevant flight constraints module 212 is configured to identify instances of potential non-compliance with constraints associated with a current flight plan. Flight constraints are restrictions for performing action items applicable to the current flight, which limit the performance of one or more action items to circumstances in which a particular condition exists. Examples of constraints may include, but are not limited to, restricting the performance of landing procedures (i.e., action items) to daytime hours (i.e., a condition) and/or to circumstances during which local weather data is available (i.e., a condition) or a destination airport tower is operational (i.e., a condition). The relevant flight constraints module 212 compares the flight constraints that apply to the current flight (obtained by the chart data module 208) to the flight data parameters (obtained by the flight data module 210), and identifies instances of potential non-compliance based on the comparison.

In practice, the chart data module 208, the flight data module 210, and/or the relevant flight constraints module 212 may be implemented with (or cooperate with) the at least one processor 202 to perform at least some of the functions and operations described in more detail herein. In this regard, the chart data module 208, the flight data module 210, and/or the relevant flight constraints module 212 may be realized as suitably written processing logic, application program code, or the like.

The display device 214 is configured to display various icons, text, and/or graphical elements for emergency alerts associated with potential non-compliance with flight constraints, or the like. In an exemplary embodiment, the display device 214 is communicatively coupled to the at least one processor 202. The at least one processor 202 and the display device 214 are cooperatively configured to display, render, or otherwise convey one or more graphical representations or images associated with emergency alerts on the display device 214, as described in greater detail below. In an exemplary embodiment, the display device 214 is realized as an electronic display configured to graphically display emergency alerts, as described herein. In some embodiments, the computing device 200 is an integrated computer system onboard an aircraft, and the display device 214 is located within a cockpit of the aircraft, and is thus implemented as an aircraft display. In other embodiments, the display device 214 is implemented as a display screen of a standalone, personal computing device (e.g., laptop computer, tablet computer). It will be appreciated that although the display device 214 may be implemented using a single display, certain embodiments may use additional displays (i.e., a plurality of displays) to accomplish the functionality of the display device 214 described herein.

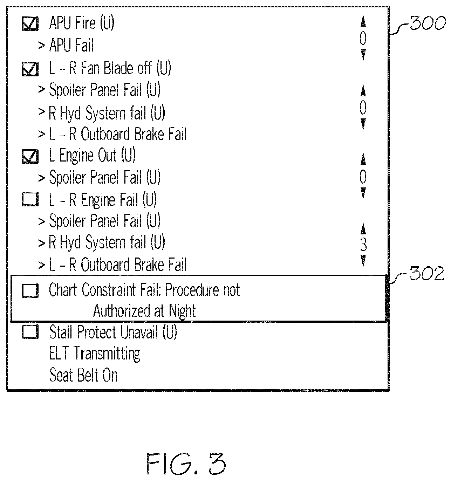

Exemplary embodiments of graphical elements presented by the display device 214 are illustrated in FIGS. 3-5. In this regard, FIGS. 3-5 illustrate graphical elements presented by the display device 214 in more detail. FIG. 3 is a diagram of a graphical display 300 of an alert 302 presented via a display device, in accordance with the disclosed embodiments. In the exemplary embodiment shown, the graphical display 300 is presented by a crew alerting system (CAS) device onboard an aircraft, which is an integrated system used in an aircraft to provide a flight crew with announcements and alerts related to aircraft onboard systems and instrumentation. Generally, conventional paper charts are replaced with electronic charts. The computing device (as described with regard to FIGS. 1-2) extracts the conditional information or constraints from the electronic chart and compares with flight data parameters which may include flight plan data and data received via the Automatic Terminal Information Service (ATIS). Based on the comparison, when a restriction applies to the pilot selected approach, a caution alert message is displayed on the forward display. In this example, the alert 302 is presented by the graphical display 300 on the forward display. The alert 302 is presented to assist flight crew members with situational awareness and flight planning. Additionally, during any applicable phase of flight, the alert 302 associated with the restriction may be automatically transmitted and/or down-linked to ground support and ATC for further assistance.

In this embodiment, a constraint exists for a current flight plan that restricts landing procedures at a destination airport to daytime hours. As shown, the alert 302 indicates that an estimated time of arrival (ETA) associated with a current flight plan does not meet the constraints on the approach procedure given in the charts note. In other words, the ETA puts the aircraft landing at the destination airport during night hours, which is not compliant with the constraint indicated by the electronic chart. The system presents the alert 302 via the graphical display 300 to inform the flight crew of the potential non-compliance with the identified constraint.

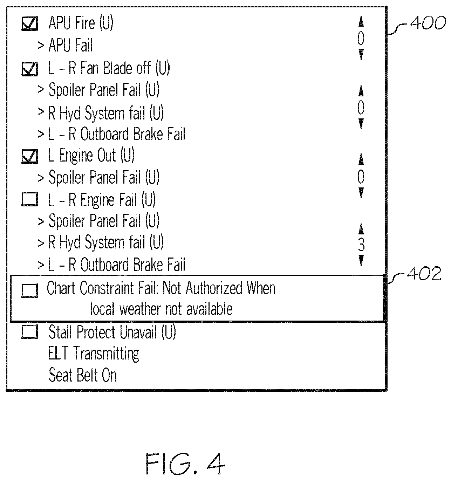

FIG. 4 is a diagram of a graphical display 400 of an alert 402 presented via a display device, in accordance with the disclosed embodiments. Implementation of the display device, the graphical display 400, and the presented alert 402 are similar to that described previously with regard to FIG. 3. However, in this embodiment, a constraint exists for a current flight plan that restricts landing procedures at a destination airport to instances where local weather data associated with the destination airport is available and received onboard the aircraft. As shown, the alert 402 indicates that such local weather data is unavailable and, as such, the constraint is not met. The system presents the alert 402 via the graphical display 400 to inform the flight crew of the potential non-compliance with the identified constraint.

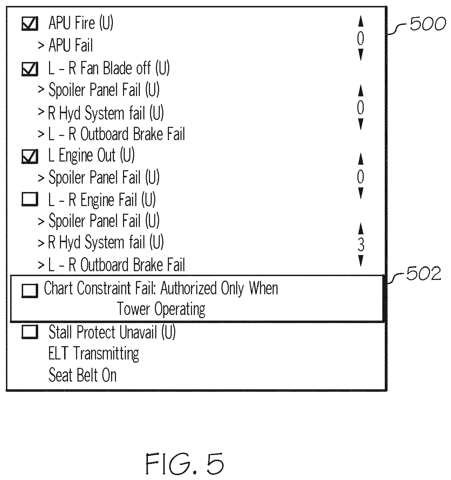

FIG. 5 is a diagram of a graphical display 500 of an alert 502 presented via a display device, in accordance with the disclosed embodiments. Implementation of the display device, the graphical display 500, and the presented alert 502 are similar to that described previously with regard to FIGS. 3-4. However, in this embodiment, a constraint exists for a current flight plan that restricts landing procedures at a destination airport to instances where the tower associated with the destination airport is operational. As shown, the alert 502 indicates that an estimated time of arrival (ETA) associated with a current flight plan does not meet the constraints on the approach procedure given in the charts note. In other words, the ETA puts the aircraft landing at the destination airport during a time period when the tower is not operational, which is not compliant with the constraint indicated by the electronic chart. The system presents the alert 502 via the graphical display 500 to inform the flight crew of the potential non-compliance with the identified constraint.

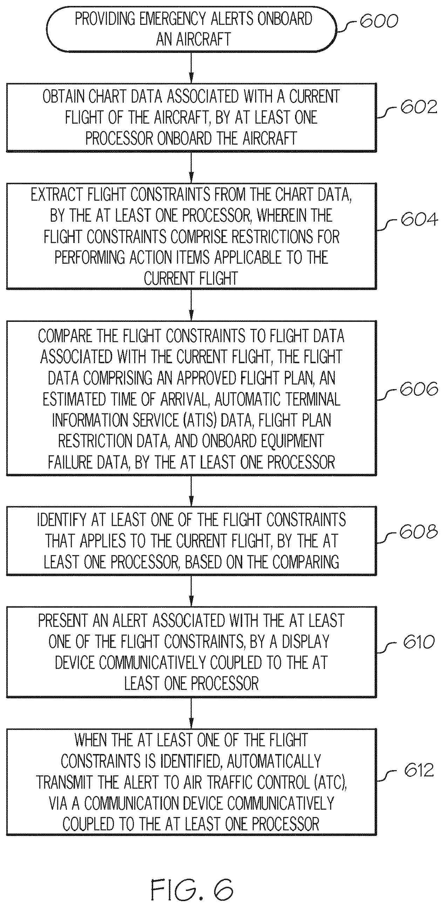

FIG. 6 is a flow chart that illustrates an embodiment of a process 600 for providing emergency alerts onboard an aircraft, in accordance with the disclosed embodiments. First, the process 600 obtains chart data associated with a current flight of the aircraft, by at least one processor onboard the aircraft (step 602). As used herein, charts may be any aviation chart or aeronautical chart provided as an informational aid to a flight crew for flight planning purposes. Chart data is any data provided by an electronic chart or a data driven chart (DDC). Aircraft generally use electronic charts for providing a flight crew member with information specific to a particular route and/or airport. Electronic charts may include airport maps; intersections and taxiways data; procedures and data associated with approach, arrival, and departure; and any flight constraints associated with a current flight plan. Charts are available in the form of a chart database, stored locally onboard the aircraft. Charts can also be made available from external device such as a computing device that stores, maintains, and executes an Electronic Flight Bag application (EFB).

Next, the process 600 extracts flight constraints from the chart data, by the at least one processor, wherein the flight constraints comprise restrictions for performing action items applicable to the current flight (step 604). Flight constraints are restrictions for performing action items applicable to the current flight, which limit the performance of one or more action items to circumstances in which a particular condition exists. Examples of constraints may include, but are not limited to, restricting the performance of landing procedures (i.e., action items) to daytime hours (i.e., a condition) and/or to circumstances during which local weather data is available (i.e., a condition) or a destination airport tower is operational (i.e., a condition). In some embodiments, constraints are predetermined information displayed on the chart, and the process 600 identifies constraints by extracting the predetermined information. In other embodiments, constraints are saved in a database, and the process 600 identifies relevant constraints by searching the database of constraint data using keywords associated with the constraints.

The process 600 then compares the flight constraints to flight data associated with the current flight, the flight data comprising an approved flight plan, an estimated time of arrival, Automatic Terminal Information Service (ATIS) data, flight plan restriction data, and onboard equipment failure data, by the at least one processor (step 606) and the process 600 identifies at least one of the flight constraints that applies to the current flight, by the at least one processor, based on the comparing (step 608). Here, the process 600 determines potential non-compliance with one or more of the constraints associated with the current flight plan. In other words, flight constraints are restrictions for performing action items applicable to the current flight, and the process 600 determines that the restrictions will not be satisfied.

In one embodiment, extracting flight constraints from the chart data includes identifying a landing procedure that is restricted from performance during predefined hours. Generally, this example applies to a destination airport that prevents aircraft landing at night, after a particular time, or during a particular time period between two predefined points in time. In this scenario, extracting the flight constraints from the chart data further comprises identifying a landing procedure associated with a condition of not authorized for performance at a destination location after a defined point in time, wherein the flight constraints comprise the condition, and wherein the action items comprise the landing procedure; comparing the flight constraints to the flight data further comprises recognizing the estimated time of arrival for the current flight and the destination location from the approved flight plan; identifying the at least one of the flight constraints that applies to the current flight further comprises determining that the landing time occurs after the defined point in time; and the alert comprises an indication that the landing procedure is not authorized at the destination location at the estimated time of arrival.

In a second embodiment, extracting flight constraints from the chart data includes identifying a landing procedure that is restricted from performance when a tower associated with a destination airport is not operational. In this scenario, extracting the flight constraints from the chart data further comprises identifying a landing procedure associated with a condition of authorized for performance at a destination location during tower operation, wherein the flight constraints comprise the condition, and wherein the action items comprise the landing procedure; comparing the flight constraints to the flight data further comprises recognizing the estimated time of arrival for the current flight, the destination location from the approved flight plan, and whether a tower associated with the destination location will be operational at the estimated time of arrival; identifying the at least one of the flight constraints that applies to the current flight further comprises determining that a tower associated with the destination location is not operational at the estimated time of arrival; and the alert comprises an indication that the landing procedure is not authorized at the destination location at the estimated time of arrival, based on the tower not being operational at the estimated time of arrival.

In a third embodiment, extracting flight constraints from the chart data includes identifying a landing procedure that is restricted from performance when weather data for the destination airport is unavailable, and is therefore inaccessible onboard the aircraft. In this scenario, extracting the flight constraints from the chart data further comprises identifying a landing procedure associated with a condition of not authorized for performance at a destination location when local weather data associated with the destination location is unavailable, wherein the flight constraints comprise the condition, and wherein the action items comprise the landing procedure; comparing the flight constraints to the flight data further comprises recognizing whether the local weather data has been received onboard the aircraft; identifying the at least one of the flight constraints that applies to the current flight further comprises determining that the local weather data has not been received onboard the aircraft; and the alert comprises an indication that the landing procedure is not authorized at the destination location, based on the local weather data not received onboard the aircraft.

The process 600 then presents an alert associated with the at least one of the flight constraints, by a display device communicatively coupled to the at least one processor (step 610). The alert may be any signal or warning indicating potential non-compliance with constraints associated with the current flight plan. The alert may be implemented as a display of text and/or graphical elements, a sound, a light, or other visual or auditory warning signal onboard the aircraft. Exemplary embodiments of the alert are presented as a text message presented via a graphical display of a crew alerting system (CAS).

In some embodiments, when the at least one of the flight constraints is identified, the process 600 automatically transmits the alert to air traffic control (ATC), via a communication device communicatively coupled to the at least one processor (step 612). In some embodiments, the process 600 transmits the alert via a radio communication transmission to ATC. In some embodiments, the process 600 transmits the alert via a communication downlink, which may be implementing using Controller Pilot Data Link Communication (CPDLC), satellite communications (SATCOM), Aircraft Communication Addressing and Reporting System (ACARS), or the like.

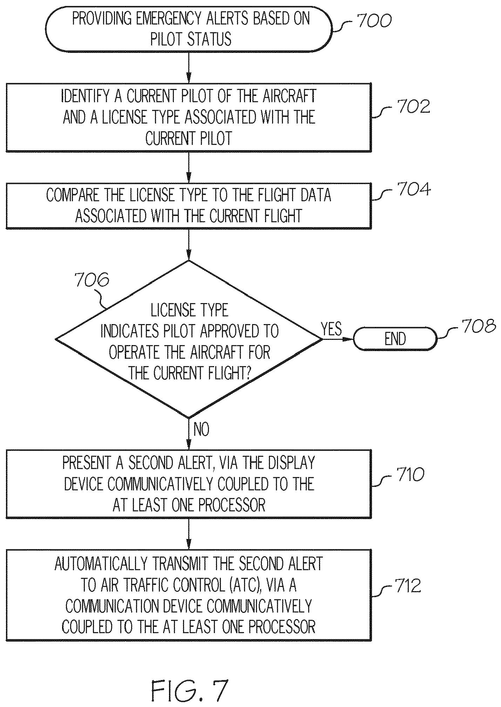

FIG. 7 is a flow chart that illustrates an embodiment of a process 700 for providing emergency alerts based on pilot status, in accordance with the disclosed embodiments. First, the process 700 identifies a current pilot of the aircraft and identifies a license type associated with the current pilot (step 702). The process 700 may obtain pilot license details (including a license type) from one or more of the following sources: (1) a filed flight plan, or (2) an airliners database. The process 700 accesses a stored database within the cockpit system that includes a pilot profile and/or details associated with a particular pilot as part of the filed flight plan, airliners database, or the like.

The process 700 then compares the license type to the flight data associated with the current flight (step 704), and determines whether the license type indicates that the pilot is approved to operate the aircraft for the current flight (decision 706). Based on selected arrival runway and the ground infrastructure associated with the selected runway, the approach capability of the runway is compared against pilot capability, wherein each pilot license includes certification for a particular approach type.

When the process 700 determines that the license type indicates that the pilot is approved to operate the aircraft for the current flight (the "Yes" branch of 706), then the process 700 ends (step 708). However, when the process 700 determines that the license type does not indicate that the pilot is approved to operate the aircraft for the current flight (the "No" branch of 706), then the process 700 presents a second alert, via the display device communicatively coupled to the at least one processor (step 710). Additionally, in certain embodiments, the process 700 automatically transmits the second alert to air traffic control (ATC), via a communication device communicatively coupled to the at least one processor (step 712). Thus, when the pilot is not licensed to fly a particular aircraft, the process 700 provides a notification to the pilot and other flight crew members onboard the aircraft, and the process 700 may also provide a notification to ATC.

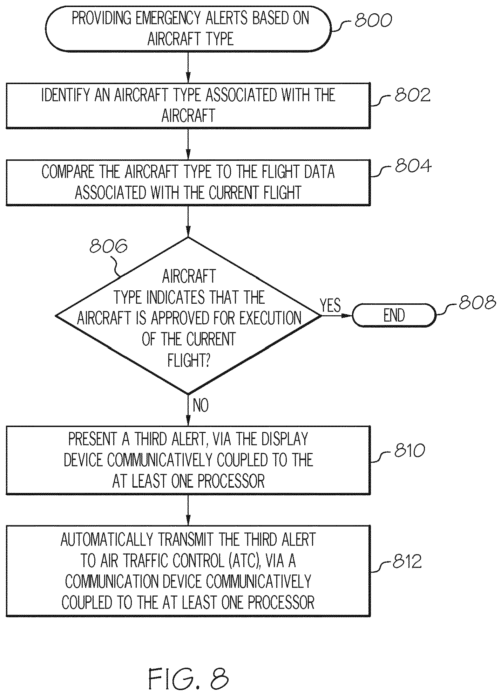

FIG. 8 is a flow chart that illustrates an embodiment of a process 800 for providing emergency alerts based on aircraft type, in accordance with the disclosed embodiments. First, the process 800 identifies an aircraft type associated with the aircraft (step 802). The process 800 may obtain aircraft type details from one or more of the following data sources: (1) a filed flight plan, (2) an airliners database, and/or (3) an avionics system onboard the aircraft. In this scenario, the process 800 identifies the aircraft type using data stored in a computer system or avionics device onboard the aircraft, or from a remotely contacted or local memory source of a computing device that stores, maintains, and executes an Electronic Flight Bag (EFB) application.

Next, the process 800 compares the aircraft type to the flight data associated with the current flight (step 804). The flight data associated with the current flight includes a selected arrival runway, which is associated with a particular approach capability based on the ground infrastructure of the runway. The approach capability of the runway is compared to the approach capabilities of the aircraft (e.g., the aircraft certification type), to determine whether the particular aircraft type is approved for landing at the selected arrival runway, and is therefore approved for execution of the current flight.

The process 800 then determines whether the aircraft type indicates that the aircraft is approved for execution of the current flight (decision 806). When the process 800 determines that the aircraft type indicates that the aircraft is approved for execution of the current flight (the "Yes" branch of 806), then the process 800 ends (step 808). However, when the process 800 determines that the aircraft type does not indicate that the aircraft is approved for execution of the current flight (the "No" branch of 806), then the process 800 presents a third alert, by a display device communicatively coupled to the at least one processor (step 810). Additionally, in certain embodiments, the process 800 automatically transmits the third alert to air traffic control (ATC), via a communication device communicatively coupled to the at least one processor (step 812). Thus, when the aircraft is not an appropriate type and is not suitable for executing the current flight plan, the process 800 provides a notification to the pilot and other flight crew members onboard the aircraft, and the process 800 may also provide a notification to ATC.

The various tasks performed in connection with processes 600-800 may be performed by software, hardware, firmware, or any combination thereof. For illustrative purposes, the preceding descriptions of processes 600-800 may refer to elements mentioned above in connection with FIGS. 1-5. In practice, portions of processes 600-800 may be performed by different elements of the described system. It should be appreciated that processes 600-800 may include any number of additional or alternative tasks, the tasks shown in each of FIGS. 6-8 need not be performed in the illustrated order, and processes 600-800 may be incorporated into a more comprehensive procedure or process having additional functionality not described in detail herein. Moreover, one or more of the tasks shown in FIGS. 6-8 could be omitted from embodiments of each of the processes 600-800, as long as the intended overall functionality remains intact.

Techniques and technologies may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processor devices can carry out the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

When implemented in software or firmware, various elements of the systems described herein are essentially the code segments or instructions that perform the various tasks. The program or code segments can be stored in a processor-readable medium or transmitted by a computer data signal embodied in a carrier wave over a transmission medium or communication path. The "computer-readable medium", "processor-readable medium", or "machine-readable medium" may include any medium that can store or transfer information. Examples of the processor-readable medium include an electronic circuit, a semiconductor memory device, a ROM, a flash memory, an erasable ROM (EROM), a floppy diskette, a CD-ROM, an optical disk, a hard disk, a fiber optic medium, a radio frequency (RF) link, or the like. The computer data signal may include any signal that can propagate over a transmission medium such as electronic network channels, optical fibers, air, electromagnetic paths, or RF links. The code segments may be downloaded via computer networks such as the Internet, an intranet, a LAN, or the like.

The following description refers to elements or nodes or features being "connected" or "coupled" together. As used herein, unless expressly stated otherwise, "coupled" means that one element/node/feature is directly or indirectly joined to (or directly or indirectly communicates with) another element/node/feature, and not necessarily mechanically. Likewise, unless expressly stated otherwise, "connected" means that one element/node/feature is directly joined to (or directly communicates with) another element/node/feature, and not necessarily mechanically. Thus, although the schematic shown in FIG. 2 depicts one exemplary arrangement of elements, additional intervening elements, devices, features, or components may be present in an embodiment of the depicted subject matter.

For the sake of brevity, conventional techniques related to signal processing, data transmission, signaling, network control, and other functional aspects of the systems (and the individual operating components of the systems) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in an embodiment of the subject matter.

Some of the functional units described in this specification have been referred to as "modules" in order to more particularly emphasize their implementation independence. For example, functionality referred to herein as a module may be implemented wholly, or partially, as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices, or the like. Modules may also be implemented in software for execution by various types of processors. An identified module of executable code may, for instance, comprise one or more physical or logical modules of computer instructions that may, for instance, be organized as an object, procedure, or function. Nevertheless, the executables of an identified module need not be physically located together, but may comprise disparate instructions stored in different locations that, when joined logically together, comprise the module and achieve the stated purpose for the module. Indeed, a module of executable code may be a single instruction, or many instructions, and may even be distributed over several different code segments, among different programs, and across several memory devices. Similarly, operational data may be embodied in any suitable form and organized within any suitable type of data structure. The operational data may be collected as a single data set, or may be distributed over different locations including over different storage devices, and may exist, at least partially, merely as electronic signals on a system or network.

While at least one exemplary embodiment has been presented in the foregoing detailed description, it should be appreciated that a vast number of variations exist. It should also be appreciated that the exemplary embodiment or embodiments described herein are not intended to limit the scope, applicability, or configuration of the claimed subject matter in any way. Rather, the foregoing detailed description will provide those skilled in the art with a convenient road map for implementing the described embodiment or embodiments. It should be understood that various changes can be made in the function and arrangement of elements without departing from the scope defined by the claims, which includes known equivalents and foreseeable equivalents at the time of filing this patent application.

## Claims

1. A method for providing emergency alerts onboard an aircraft, the method comprising:
obtaining chart data associated with a current flight of the aircraft, by at least one processor onboard the aircraft;
extracting flight constraints from the chart data, by the at least one processor, wherein the flight constraints comprise restrictions for performing action items applicable to the current flight;
comparing the flight constraints to flight data associated with the current flight, the flight data comprising an approved flight plan, an estimated time of arrival, Automatic Terminal Information Service (ATIS) data, flight plan restriction data, and on board equipment failure, by the at least one processor;
identifying at least one of the flight constraints that applies to the current flight, by the at least one processor, based on the comparing; and
presenting an alert associated with the at least one of the flight constraints, by a display device communicatively coupled to the at least one processor.

2. The method of Claim 1, further comprising:
when the at least one of the flight constraints is identified, automatically transmitting the alert to air traffic control, via a communication device communicatively coupled to the at least one processor.

3. The method of Claim 1, further comprising:
identifying a current pilot of the aircraft, by the at least one processor;
identifying a license type associated with the current pilot, by the at least one processor;
comparing the license type to the flight data associated with the current flight, by the at least one processor; and
when the license type indicates that the current pilot is not approved to operate the aircraft for the current flight, presenting a second alert by the display device communicatively coupled to the at least one processor.

4. The method of Claim 3, further comprising:
when the license type indicates that the current pilot is not approved to operate the aircraft for the current flight, automatically transmitting the second alert to air traffic control, via a communication device communicatively coupled to the at least one processor.

5. The method of Claim 1, further comprising:
identifying an aircraft type associated with the aircraft, by the at least one processor;
comparing the aircraft type to the flight data associated with the current flight, by the at least one processor; and
when the aircraft type indicates that the aircraft is not approved for execution of the current flight, presenting a third alert by the display device communicatively coupled to the at least one processor.

6. The method of Claim 5, further comprising:
when the aircraft type indicates that the aircraft is not approved for execution of the current flight, automatically transmitting the third alert to air traffic control, via a communication device communicatively coupled to the at least one processor.

7. The method of Claim 1, wherein extracting the flight constraints from the chart data further comprises identifying a landing procedure associated with a condition of not authorized for performance at a destination location after a defined point in time, wherein the flight constraints comprise the condition, and wherein the action items comprise the landing procedure;
wherein comparing the flight constraints to the flight data further comprises recognizing the estimated time of arrival for the current flight and the destination location from the approved flight plan;
wherein identifying the at least one of the flight constraints that applies to the current flight further comprises determining that the estimated time of arrival occurs after the defined point in time; and
wherein the alert comprises an indication that the landing procedure is not authorized at the destination location at the estimated time of arrival.

8. The method of Claim 1, wherein extracting the flight constraints from the chart data further comprises identifying a landing procedure associated with a condition of authorized for performance at a destination location during tower operation, wherein the flight constraints comprise the condition, and wherein the action items comprise the landing procedure;
wherein comparing the flight constraints to the flight data further comprises recognizing the estimated time of arrival for the current flight, the destination location from the approved flight plan, and whether a tower associated with the destination location will be operational at the estimated time of arrival;
wherein identifying the at least one of the flight constraints that applies to the current flight further comprises determining that a tower associated with the destination location is not operational at the estimated time of arrival; and
wherein the alert comprises an indication that the landing procedure is not authorized at the destination location at the estimated time of arrival, based on the tower not being operational at the estimated time of arrival.

9. The method of Claim 1, wherein extracting the flight constraints from the chart data further comprises identifying a landing procedure associated with a condition of not authorized for performance at a destination location when local weather data associated with the destination location is unavailable, wherein the flight constraints comprise the condition, and wherein the action items comprise the landing procedure;
wherein comparing the flight constraints to the flight data further comprises recognizing whether the local weather data has been received onboard the aircraft;
wherein identifying the at least one of the flight constraints that applies to the current flight further comprises determining that the local weather data has not been received onboard the aircraft; and
wherein the alert comprises an indication that the landing procedure is not authorized at the destination location, based on the local weather data not received onboard the aircraft.

10. A system for providing emergency alerts onboard an aircraft, the system comprising:
a system memory element;
a display device, configured to present the emergency alerts onboard the aircraft;
a communication device, configured to establish communication connections with air traffic control (ATC) and at least one remote server, and to obtain flight data via the communication connections; and
at least one processor, communicatively coupled to the system memory element, the display device, and the communication device, the at least one processor configured to:
obtain chart data associated with a current flight of the aircraft;
extract flight constraints from the chart data, wherein the flight constraints comprise restrictions for performing action items applicable to the current flight;
compare the flight constraints to the flight data associated with the current flight, the flight data comprising an approved flight plan, an estimated time of arrival, Automatic Terminal Information Service (ATIS) data, flight plan restriction data, and on board equipment failure;
identify at least one of the flight constraints that applies to the current flight, based on the comparing; and
present an alert associated with the at least one of the flight constraints, via the display device.

11. The system of Claim 10, wherein the at least one processor is further configured to:
identify a current pilot of the aircraft;
identify a license type associated with the current pilot;
compare the license type to the flight data associated with the current flight; and
when the license type indicates that the current pilot is not approved to operate the aircraft for the current flight, presenting a second alert.

12. The system of Claim 10, wherein the at least one processor is further configured to:
identify an aircraft type associated with the aircraft;
compare the aircraft type to the flight data associated with the current flight; and
when the aircraft type indicates that the aircraft is not approved for execution of the current flight, presenting a third alert.

13. The system of Claim 10, wherein extracting the flight constraints from the chart data further comprises identifying a landing procedure associated with a condition of not authorized for performance at a destination location after a defined point in time, wherein the flight constraints comprise the condition, and wherein the action items comprise the landing procedure;
wherein comparing the flight constraints to the flight data further comprises recognizing the estimated time of arrival for the current flight and the destination location from the approved flight plan;
wherein identifying the at least one of the flight constraints that applies to the current flight further comprises determining that the estimated time of arrival occurs after the defined point in time; and
wherein the alert comprises an indication that the landing procedure is not authorized at the destination location at the estimated time of arrival.

14. The system of Claim 10, wherein extracting the flight constraints from the chart data further comprises identifying a landing procedure associated with a condition of authorized for performance at a destination location during tower operation, wherein the flight constraints comprise the condition, and wherein the action items comprise the landing procedure;
wherein comparing the flight constraints to the flight data further comprises recognizing the estimated time of arrival for the current flight, the destination location from the approved flight plan, and whether a tower associated with the destination location will be operational at the estimated time of arrival;
wherein identifying the at least one of the flight constraints that applies to the current flight further comprises determining that a tower associated with the destination location is not operational at the estimated time of arrival; and
wherein the alert comprises an indication that the landing procedure is not authorized at the destination location at the estimated time of arrival, based on the tower not being operational at the estimated time of arrival.

15. The system of Claim 10, wherein extracting the flight constraints from the chart data further comprises identifying a landing procedure associated with a condition of not authorized for performance at a destination location when local weather data associated with the destination location is unavailable, wherein the flight constraints comprise the condition, and wherein the action items comprise the landing procedure;
wherein comparing the flight constraints to the flight data further comprises recognizing whether the local weather data has been received onboard the aircraft;
wherein identifying the at least one of the flight constraints that applies to the current flight further comprises determining that the local weather data has not been received onboard the aircraft; and
wherein the alert comprises an indication that the landing procedure is not authorized at the destination location, based on the local weather data not received onboard the aircraft.
